Europäisches Patentamt

**European Patent Office**

Office européen des brevets

(19)

(11) Numéro de publication: **0 268 777**
**B1**

(12) **FASCICULE DE BREVET EUROPEEN**

(45) Date de publication du fascicule du brevet: **23.01.91**

(51) Int. Cl.⁵: **G 01 M 3/20**

(21) Numéro de dépôt: **87113973.9**

(22) Date de dépôt: **24.09.87**

(54) Installation de fuite à gaz traceur et procédé d'utilisation.

(30) Priorité: **26.09.86 FR 8613455**

(43) Date de publication de la demande:
**01.06.88 Bulletin 88/22**

(45) Mention de la délivrance du brevet:
**23.01.91 Bulletin 91/04**

(84) Etats contractants désignés:
**AT BE CH DE ES FR GB GR IT LI LU NL SE**

(56) Documents cités:
**EP-A-0 070 341**
**DE-A-2 049 117**
**DE-A-3 144 503**
**US-A-4 472 962**

(73) Titulaire: **ALCATEL CIT**
**12 Rue de la Baume**
**F-75008 Paris (FR)**

(72) Inventeur: **Saulgeot, Claude**
**11 Clos des Barattes**
**F-74290 Veyrier du Lac (FR)**

(74) Mandataire: **Weinmiller, Jürgen et al**
**Lennéstrasse 9 Postfach 24**
**D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne une installation de détection de fuite à gaz traceur comprenant une pompe mécanique primaire dont l'aspiration est reliée, d'une part à une pièce à tester par l'intermédiaire d'une première vanne et d'autre part au refoulement d'une pompe secondaire turbomoléculaire par l'intermédiaire d'une seconde vanne, l'aspiration de ladite pompe turbomoléculaire étant reliée à la pièce à tester par l'intermédiaire d'une troisième vanne, une cellule spectrométrique étant en outre reliée du côté de l'aspiration de ladite pompe turbomoléculaire.

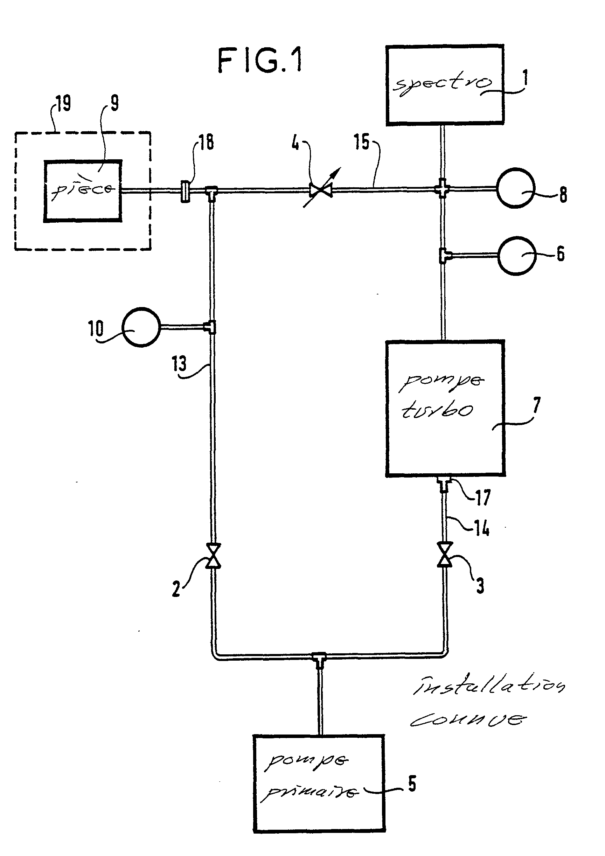

Dans une telle installation connue de US—A—4472962 et représentée sur la figure 1, le fonctionnement est le suivant:

Le cellule spectrométrique 1 étant à l'arrêt, la première vanne 2, la second vanne 3 et la troisième vanne 4 étant fermées, on met en route la pompe mécanique primaire 5 et l'on ouvre la seconde vanne 3.

Après quelques minutes, le manomètre 6 indique une pression inférieure a 1 mb et commande de démarrage de la pompe turbomoléculaire 7.

Lorsque la vitesse nominale de rotation de la pompe turbomoléculaire est atteinte, la pression indiquée par le manomètre 8 descend de $10^{-2}$ mg à $10^{-6}$ mb et on est alors en mesure d'allumer le filament de la cellule spectrométrique 1.

On ferme la seconde vanne 3 et l'on ouvre la première vanne 2. La pompe 5 vide alors la pièce à tester 9. Lorsque la pression dans la pièce à tester, mesurée par un manomètre 10, devient inférieure à 1 mb, on ferme la première vanne 2 et l'on ouvre la seconde vanne 3.

Après quelques minutes, on peut ouvrir lentement la troisième vanne 4 de telle sorte que la pression indiquée par la manomètre 8, ne remonte pas au-dessous de $10^{-4}$ mb. La mesure de la fuite s'effectue lorsque la troisième vanne 4 est grande ouverte.

Dans une telle installation, et avec ce procédé d'exécution, le pompage de la pièce 9 à tester est relativement long.

La présente invention a pour but de diminuer le temps de pompage de la pièce à tester.

L'invention a ainsi pour objet une installation de détection de fuite à gaz traceur du type décrit ci-dessus caractérisée en ce que ladite pompe turbomoléculaire est constituée de deux étages en série, à la séparation desquels aboutit un orifice d'aspiration intermédiaire relié à la pièce à tester par l'intermédiaire d'une quatrième vanne et dont le premier étage, situé du côté de la cellule spectrométrique, a un haut taux de compression hélium et dont le second étage, situé du côté de la pompe primaire a un fort débit d'azote.

L'invention va maintenant être décrite en référence au dessin annexé dans lequel:

La figure 1 représente une installation de détection de fuite connue et qui a déja été décrite;

La figure 2 représente une installation de détection de fuite selon l'invention.

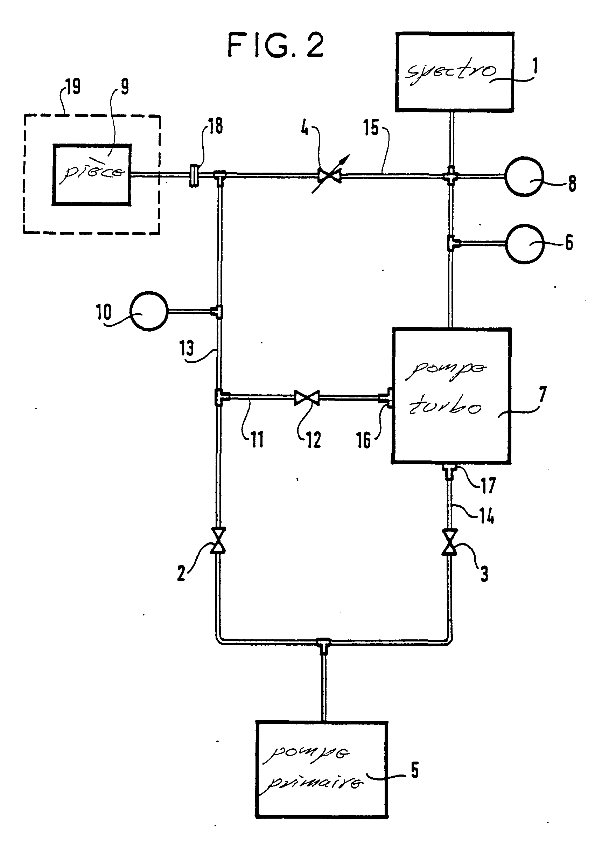

En se référant à la figure 2 l'installation comprend une pompe mécanique primaire 5 dont l'aspiration est reliée à une pièce à tester 9 par une conduite 13 munie d'une première vanne 2.

L'aspiration de la pompe primaire 5 est en outre reliée par une conduite 44 munie d'une seconde vanne 3 au refoulement 17 d'une pompe secondaire turbomoléculaire 7. L'aspiration de la pompe turbomoléculaire 7 est reliée par une conduite 15, munie d'une troisième vanne 4, à la pièce à tester 9. Une cellule spectrométrique 1 est reliée à l'aspiration de la pompe turbomoléculaire 7.

Conformément à l'invention, la pompe turbomoléculaire 7 est constituée de deux étages en série et comporte entre ces deux étages un orifice d'aspiration intermédiaire 16 qui est relié, par une conduite 11 munie d'une quatrième vanne 12, à la pièce à tester 9.

En outre, la pompe turbomoléculaire 7 est construite de façon à ce que son premier étage, situé dans sa demi-partie supérieure, du côté de la cellule spectrométrique 1 ait un fort taux de compression d'hélium pour diminuer le bruit de fond de l'hélium de l'air et de façon à ce que son second étage, situé dans sa demi-partie inférieure du côté de la pompe primaire 5, ait un fort débit d'azote afin de diminuer le temps de pompage de la pièce.

Des manomètres 6, 8 et 10 permettent de mesurer les pressions à différents niveaux.

Le fonctionnement du dispositif est le suivant:

Les vannes 2, 3, 4 et 12 étant formées, on met en route la pompe primaire 5 et l'on ouvre la seconde vanne 3. Après quelques secondes, le manomètre 6 indique une pression inférieure à 1 mb et commande le démarrage de la pompe turbomoléculaire 7. Lorsque sa vitesse de rotation est atteinte, la pression indiquée par le manomètre 8 descend jusqu'à $10^{-6}$ mb.

On peut alors allumer le filament de la cellule spectrométrique 1.

La pièce à tester 9 est alors reliée à l'orifice d'entrée 18 de l'ensemble de l'installation, communément renfermée dans un coffret appelé détecteur.

Le gaz traceur, tel que de l'hélium, est contenu dans une enceinte entourant la pièce 9 et représentée par des pointillés 19 sur la figure. La pièce elle-même contient de l'air à la pression atmosphérique.

On vide alors la pièce 9 en fermant la seconde vanne 3 et en ouvrant la première vanne 2. La pompe primaire 5 évacue l'air de la pièce 9 et lorsque le manomètre 10 indique une pression qui devient inférieure à 1 mb, on ferme alors la première vanne 2 et on ouvre la seconde vanne 3 et la quatrième vanne 12. Ainsi la pièce à tester est alors vidée par une partie de la pompe turbomoléculaire 7 et par la pompe primaire 5 reliées en série.

Ceci permet de profiter de la bonne performance de la pompe turbomoléculaire 7 dans le domaine de pression inférieure à 1 mb, alors qu'au-dessous de cette pression, la vitesse de pompage de la seule pompe primaire 5, dans le cas de l'art antérieur, est faible et diminue progressivement pour atteindre 35% de sa valeur nominale à la pression de $10^{-2}$ mb.

Lorsque la pression mesurée par la manomètre 10 atteint $10^{-2}$ mb, on ferme alors la quatrième vanne 12 puis après quelques minutes, on ouvre lentement la troisième vanne 4 qui est une vanne d'entrée, progressive, de telle façon que la pression dans la cellule 1 indiquée par le manomètre 8 ne remonte pas au-dessus de $10^{-4}$ mb.

La mesure de la fuite s'effectue lorsque la vanne 4 est grande ouverte.

Ainsi, par rapport à l'art intérieur, on obtient une diminution importante du temps de pompage de la pièce à tester entre 1 mb et $10^{-2}$ mb.

A titre indicatif on donne les caractéristiques suivantes pour le groupe turbomoléculaire 7 constitué de deux étages en série, à la séparation desquels aboutit l'orifice 16 d'aspiration intermédiaire:

A) Premier étage côté cellule 1:

| | | |
|---|---|---|
| taux de compression d'hélium | : | 1000 |
| débit d'hélium | : | 20 l/s |
| débit d'azote | : | 50 l/s |

deux solutions de contruction:

1) 8 étages turbo, dont deux rangées d'ailettes, côte aspiration, inclinées à 22°, trois à 17° et trois, côte refoulement, à 15°

2) 1 étage de pompe Holweck

B) Deuxième étage côte pompe primaire 5:

| | | |
|---|---|---|
| débit d'azote | : | 100 l/s |
| taux de compression d'azote | : | 100 |
| taux de compression hélium | : | 6 |

solution de construction:

4 étages turbo dont deux, côté aspiration, inclinés à 35°C et les deux autres, côté refoulement, à 22°.

## Revendications

1. Installation de détection de fuite à gaz traceur comprenant une pompe mécanique primaire (5) dont l'aspiration est reliée, d'une part à une pièce à tester (9) par l'intermédiaire d'une première vanne (2) et d'autre part au refoulement (17) d'une pompe secondaire tubormoléculaire (7) par l'intermédiaire d'une seconde vanne (3), l'aspiration de ladite pompe turbomoléculaire étant reliée à la pièce à tester par l'intermédiaire d'une troisième vanne (4), une cellule spectrométrique (1) étant en outre reliée du côté de l'aspiration de ladite pompe tubomoléculaire, caractérisé en ce que ladite pompe turbomoléculaire est constituée de deux étages en série, à la séparation desquels aboutit un orifice (16) d'aspiration intermédiaire relié à la pièce à tester (9) par l'intermédiaire d'une quatrième vanne (12) et dont le premier étage, situé du côté de la cellule spectrométrique (1), a un haut taux de compression hélium et dont le second étage situé du côté de la pompe primaire (5) a un fort débit d'azote.

2. Procédé d'utilisation de l'installation de détection selon la revendication 1, caractérisé en ce que dans un premier temps, la pièce à tester (9) est prévidée jusqu'aux environs de 1 mb par ladite pompe mécanique primaire (5) et qu'au delà de 1 mb, elle este pompée par ledit second étage de ladite pompe turbomoléculaire (7) en série avec la pompe mécanique primaire (5).

## Patentansprüche

1. Spürgas-Leckdetektoranlage, mit einer mechanischen Primärpumpe (5), deren Saugeinlaß einerseits über ein erstes Ventil (2) mit dem Prüfling (9) und andererseits über ein zweites Ventil (3) mit dem Auslaß (17) einer sekundären Turbomolekularpumpe (7) verbunden ist, wobei der Saugeinlaß der Turbomolekularpumpe über ein drittes Ventil (4) mit dem Prüfling verbunden und außerdem eine Spektrometerzelle (1) an die Saugenlaßseite der Turbomolekularpumpe angeschlossen ist, dadurch gekennzeichnet, daß die Turbomolekularpumpe aus zwei in Reihe geschalteten Stufen besteht, in deren Übergangszone eine über ein viertes Ventil (12) mit dem Prüfling (9) verbundene Zwischen-Saugöffnung (16) einmündet, wobei die erste, auf Seiten der Spektrometerzelle (1) liegende Stufe ein hohes Heliumkompressionsverhältnis und die zweite, auf Seiten der Primärpumpe (5) gelegene Stufe eine hohe Stickstoffpumpleistung aufweist.

2. Verfahren zur Anwendung der Leckdetektoranlage nach Anspruch 1, dadurch gekennzeichnet, daß der Prüfling (9) zunächst mit Hilfe der mechanischen Primärpumpe (5) auf etwa 1 mb vorevakuiert wird und daß er unterhalb vuert wird und daß er unterhalb von 1 mb durch die in Reihe mit der mechanischen Primärpumpe (5) geschaltete zweite Stufe der Turbomolekularpumpe (7) leergepumpt wird.

## Claims

1. An installation for detecting a leak of a tracer gas, the installation comprising a mechanical pump (5) whose inlet is connected firstly to a part (9) under test via a first valve (2), and secondly to the outlet (17) of a turbomolecular secondary pump (7) via a second valve (3), with the inlet of said turbomolecular pump being connected to the part under test via third valve (4), and with a spectrometer cell (11) being also connected to the inlet side of said turbomolecular pump, the installation being characterized in that said turbomolecular pump is constituted by two stages in series, with the connection between the two stages having an intermediate inlet orifice (16) connected thereto and also connected to the part under test (9) via a fourth valve (12), with the first stage connected to the spectrometer cell (1) having a high helium compression ratio, and with the second stage connected to the primary pump (5) having a high nitrogen throughput.

2. A method of using an installation for detecting a leak according to claim 1, characterized in that initially the part under test (9) is preevacuated down to about 1 mb by said mechanical primary pump (5), and that below 1 mb it is pumped out by said second stage of said turbomolecular pump (7) in series with the mechanical primary pump (5).

# FIG.1

FIG. 2